(19) Europäisches Patentamt
European Patent Office
Office européen des brevets

(11) Veröffentlichungsnummer: **0 051 560**
**B1**

(12) # EUROPÄISCHE PATENTSCHRIFT

(45) Veröffentlichungstag der Patentschrift: **16.01.85**

(51) Int. Cl.⁴: **C 09 B 29/33** // C08K5/16

(21) Anmeldenummer: **81810394.7**

(22) Anmeldetag: **28.09.81**

(54) **Heterocyclen enthaltende Monoazopigmente, Verfahren zu deren Herstellung und deren Verwendung.**

(30) Priorität: **03.10.80 CH 7401/80**

(43) Veröffentlichungstag der Anmeldung: **12.05.82 Patentblatt 82/19**

(45) Bekanntmachung des Hinweises auf die Patenterteilung: **16.01.85 Patentblatt 85/3**

(84) Benannte Vertragsstaaten: **CH DE LI**

(56) Entgegenhaltungen:
**FR - A - 769 922**
**US - A - 3 963 694**

**Die Akte enthält technische Angaben, die nach dem Eingang der Anmeldung eingereicht wurden und die *nicht in dieser Patentschrift enthalten sind.***


(73) Patentinhaber: **CIBA-GEIGY AG, Postfach, CH-4002 Basel (CH)**

(72) Erfinder: **Hari, Stefan, Dr., Feldstrasse 49, CH-4123 Allschwil (CH)**
Erfinder: **Wick, Arnold, Dr., Dahlienstrasse 5, CH-4106 Therwil (CH)**


**EP 0 051 560 B1**


Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft neue Heterocyclen enthaltende Monoazopigmente, Verfahren zu deren Herstellung, deren Verwendung zum Färben von hochmolekularen organischen Materialien sowie das damit gefärbte hochmolekulare organische Material.

In der GB-PS 1 188 766 sind Azopigmente erwähnt, die durch Kuppeln eines diazotierten N-substituierten Aminophthalimids u.a. mit 2-Acetoacetylamino -6- äthoxybenzthiazol erhalten werden.

In der FR-PS 769 922 und in der JP-OS 69/3230 sind Azopigmente beschrieben, die durch Kuppeln diazotierter substituierter Aminobenzole mit 2-Acetoacetylamino -6- äthoxybenzthiazol erhalten werden.

Die neuen Monoazopigmente entsprechen der Formel I

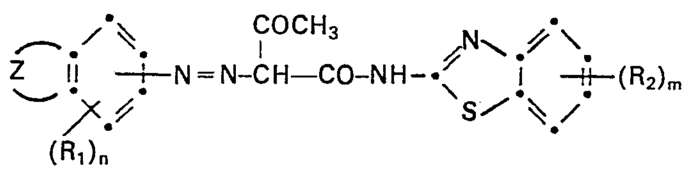

(I),

worin $R^1$ Wasserstoff, Methyl, Chlor, Methoxy, Äthoxy, Phenoxy oder $C_2$–$C_5$-Alkoxycarbonyl und $R_2$ Methyl, Chlor, Fluor, Brom, $C_1$–$C_4$-Alkoxy, Phenoxy, Methoxycarbonyl, Äthoxycarbonyl, Carbamoyl, Nitro oder eine Gruppe $-NHCO-R_3$ bedeuten, wobei $R_3$ eine $C_1$–$C_3$-Alkylgruppe bedeutet, Z zusammen mit den beiden Kohlenstoffatomen, an welches es gebunden ist, einen 5- oder 6-gliedrigen heterocyclischen Ring bildet, wobei Z einen zweiwertigen Rest der Formeln $-CONHCO-$, $-CONHCONH-$, $-CONHCR_5=N-$, $-NHCONR_4-$, $-NHCOCONH-$, $-NR_4COO-$, $-NR_4COS-$, $-N=CR_6O-$, $-N=CR_6S-$, $-N=CR_6NH-$, $-NHCOCH=CR_4-$ oder $-NHCOCH_2O-$ bedeutet, wobei $R_4$ Wasserstoff, $C_1$–$C_4$-Alkyl oder gegebenenfalls durch Halogen, $C_1$–$C_4$-Alkyl oder $C_1$–$C_4$-Alkoxy substituiertes Phenyl und $R_5$ Wasserstoff oder eine Gruppe 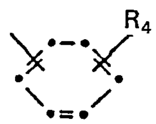 bedeuten, wobei $R_4$ die obenangegebene Bedeutung hat, und $R_6$ Wasserstoff, Methyl oder Phenyl ist, n 1 oder 2 und m 1, 2 oder 3 bedeuten.

Bedeuten n 2 und/oder m 2 oder 3, so können die $R_1$ und $R_2$ gleiche oder verschiedene definitionsgemässe Reste darstellen. Stellt n 2 dar, so hat ein $R_1$ die oben angegebene Bedeutung und das zweite $R_1$ ist vorzugsweise Wasserstoff oder Chlor, Bei m = 2 oder 3 hat ein $R_2$ die unter Formel I angegebene Bedeutung, das zweite $R_2$ ist bevorzugt Methyl, Chlor, Methoxy oder Äthoxy und das dritte $R_2$ stellt insbesondere Methyl dar.

$R_1$ kann als $C_{2-5}$-Alkoxycarbonyl z.B. Methoxycarbonyl, Äthoxycarbonyl, Isopropyloxycarbonyl, n-Butyloxycarbonyl oder sek-Butyloxycarbonyl bedeuten. Bevorzugt werden Methoxycarbonyl und Äthoxycarbonyl.

Alkoxygruppen $R_2$, Alkylgruppen $R_4$ und Alkyl- oder Alkoxysubstituenten an Gruppen $R_4$ können geradkettig oder verzweigt sein, sind aber bevorzugt geradkettig. Beispiele derartiger Gruppen oder Substituenten sind Mehyl, Äthyl, n-Propyl, Isopropyl, n-Butyl, sek-Butyl, Methoxy, Äthoxy, n-Propyloxy, Isopropyloxy, n-Butyloxy und sek-Butyloxy.

Bedeutet $R_3$ eine $C_{1-3}$-Alkylgruppe, so handelt es sich z.B. um Methyl, Äthyl oder Isopropyl.

Von besonderem Interesse sind Verbindungen der Formel I, worin $R_1$ und $R_2$ die oben angegebene Bedeutung haben und Z eine Gruppe $-NHCOCH=R_4-$ mit $CR_4$ = Wasserstoff und besonders Methyl, eine Gruppe $-CONHCO-$ und vor allem eine Gruppe $-NHCONR_4-$bedeutet, worin $R_4$ die oben angegebene Bedeutung hat und insbesondere Wasserstoff ist.

Die bevorzugte Bedeutung von n und m ist 1.

Besonders bevorzugt sind Verbindungen der Formel II

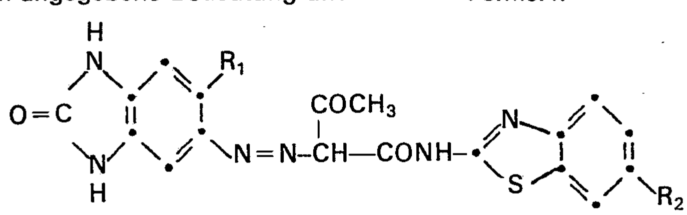

(II)

worin $R_1$ Methyl, Chlor oder Methoxy und $R_2$ Methyl, Chlor, geradkettiges $C_1$–$C_4$-Alkoxy, Methoxycarbonyl, Äthoxycarbonyl, Carbamoyl, $-NO_2$ oder eine Gruppe $-NHCOR_3$ bedeuten, wobei $R_3$ eine $C_{1-3}$-Alkylgruppe darstellt, vor allem Verbindungen der Formel II, worin $R_1$ Methyl, Chlor oder Methoxy und $R_2$ Methyl, Chlor, geradkettiges $C_{1-4}$-Alkoxy oder eine Gruppe $-NHCOR_3$ bedeuten.

Die Herstellung der Verbindungen der Formel I erfolgt nach bekannten Methoden z.B. durch Kuppeln eines Diazoniumsalzes eines Amins der Formel III

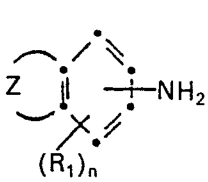

(III),

worin Z, $R_1$ und n die oben angegebene Bedeutung haben, mit einem Acetoacetylamid der Formel IV

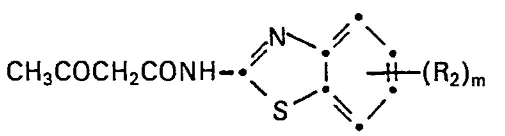

(IV),

worin $R_2$ und m die oben angegebene Bedeutung haben.

Die Verbindungen der Formeln III und IV sind bekannt und können nach bekannten Methoden hergestellt werden.

Als Beispiele von Aminen der Formel III seien die folgenden genannt: 5-Amino -6- chlor-benzimidazolon, 5-Amino -6- methyl-benzimidazolon, 5-Amino -6- methoxy-benzimidazolon, 5-Amino-6-äthoxy-benzimidazolon, 5-Amino -6- methoxycarbonyl-benzimidazolon, 5-Amino -6- äthoxycarbonyl-benzimidazolon, 6-Amino -5- methylbenzoxazolon, 7-Amino-4,6-dimethyl-chinolon-2, 6-Amino -7- chlor -4- methylchinolon-2, 7-Amino -6- chlor-phenylmorpholon-3, 7-Amino-6-methyl-phenylmorpholon-3, 6-Amino-2,3-dihydroxychinoxalin, 4-Aminophthalimid, 3-Aminophthalimid.

Die Kupplungskomponenten gemäss Formel IV seien durch folgende Beispiele illustriert: 2-Acetoacetylamino -6- methyl-benzthiazol, 2-Acetoacetylamino -6- chlor-benzthiazol, 2-Acetoacetylamino -6- methoxy-benzthiazol, 2-Acetoacetylamino -6- äthoxy-benzthiazol, 2-Acetoacetylamino -6- methoxycarbonyl-benzthiazol, 2-Acetoacetylamino -6- äthoxycarbonylbenzthiazol, 2-Acetoacetylamino -6- carbamoylbenzthiazol, 2-Acetoacetylamino -4- methylbenzthiazol, 2-Acetoacetylamino -5- methylbenzthiazol, 2-Acetoacetylamino -7- methylbenzthiazol, 2-Acetoacetylamino -4- chlorbenzthiazol, 2-Acetoacetylamino -5- chlorbenzthiazol, 2-Acetoacetylamino -7- chlor-benzthiazol, 2-Acetoacetylamino-5,6-dimethyl-benzthiazol, 2-Acetoacetylamino-3,6-dimethyl-benzthiazol, 2-Acetoacetylamino -4- methyl -6- chlor-benzthiazol, 2-Acetoacetylamino -4- chlor -6- methyl-benzthiazol, 2-Acetoacetylamino -6- acetylamino-benzthiazol, 2-Acetoacetylamino -5- chlor -6- methyl -4- methoxybenzthiazol, 2-Acetoacetylamino-4,6,7-trimethylbenzthiazol, 2-Aetoacetylamino-4,6-dichlorbenzthiazol, 2-Acetoacetylamino -6- n-butoxybenzthiazol, 2-Acetoacetylamino -6- nitrobenzthiazol, 2-Acetoacetylamino -6- phenoxybenzthiazol, 2-Acetoacetylamino -6- fluorbenzthiazol.

Die Diazotierung erfolgt nach bekannten Methoden. Die Kupplung findet vorzugsweise in schwach saurem Medium statt, zweckmässig in Gegenwart gebräuchlicher, die Kupplung fördernder Mittel. Als solche seien insbesondere Dispergiermittel genannt, beispielsweise Aralkylsulfonate, wie Dodecylbenzolsulfonat, oder 1,1'-Dinaphthylmethan-2,2'-disulfonsäure oder Polykondensationsprodukte von Alkylenoxyden. Die Dispersion der Kupplungskomponente kann auch vorteilhaft Schutzkolloide, beispielsweise Methylcellulose oder kleinere Mengen inerter, in Wasser schwer löslicher oder unlöslicher organischer Lösungsmittel enthalten, beispielsweise gegebenenfalls halogenierte oder nitrierte aromatische Kohlenwasserstoffe, wie Benzol, Toluol, Xylol, Chlorbenzol, Dichlorbenzol oder Nitrobenzol, sowie aliphatische Halogenkohlenwasserstoffe, wie z.B. Tetrachlorkohlenstoff oder Trichloräthylen, ferner mit Wasser mischbare organische Lösungsmittel, wie Aceton, Methyläthylketon, Methanol, Äthanol oder Isopropanol oder vorzugsweise Dimethylformamid.

Man kann die Kupplung auch vorteilhaft in der Weise durchführen, dass man eine saure Lösung des Diazoniumsalzes mit einer alkalischen Lösung der Kupplungskomponente in einer Mischdüse kontinuierlich vereinigt, wobei eine sofortige Kupplung der Komponenten erfolgt. Es ist darauf zu achten, dass Diazokomponente und Kupplungskomponente in äquimolekularen Mengen in der Mischdüse vorhanden sind, wobei es sich als vorteilhaft erweist, einen geringeren Überschuss der Diazokomponente zu verwenden. Dies wird am einfachsten durch Kontrolle des pH-Wertes der Flüssigkeit in der Mischdüse bewirkt. Auch ist in der Mischdüse für eine starke Durchwirbelung der beiden Lösungen zu sorgen. Die entstandene Farbstoffdispersion wird der Mischdüse laufend entzogen, und der Farbstoff wird durch Filtration abgetrennt.

Schliesslich kann die Kupplung auch so vollzogen werden, dass man das Amin mit der Kupplungskomponente im Molverhältnis 1:1 in einem organischen Lösungsmittel suspendiert und mit einem diazotierenden Mittel, insbesondere einem Ester der salpetrigen Säure, wie Methyl-, Äthyl-, Butyl-, Amyl- oder Oktylnitrit, oder aber mit wässriger Natriumnitritlösung behandelt.

Die erfindungsgemässen Pigmente können z.B. als Rohprodukte verwendet werden. Falls erwünscht, kann man jedoch die Rohprodukte durch Mahlen oder Kneten in eine feindisperse Form überführen. Dabei werden zweckmässig Mahlhilfsmittel, wie anorganische und/oder organische Salze in Gegenwart oder Abwesenheit organischer Lösungsmittel verwendet. Nach dem Mahlen werden Hilfsmittel wie üblich entfernt, lösliche anorganische Salze z.B. mit Wasser und wasserunlösliche organische Hilfsmittel beispielsweise durch Wasserdampfdestillation. Auch durch Behandeln der Rohpigmente mit organischen Lösungsmitteln, vorzugsweise solchen, die über 100 °C sieden, kann, wenn erwünscht, oft eine Verbesserung der Eigenschaften erreicht werden. Als besonders geeignet erweisen sich durch Halogenatome, Alkyl- oder Nitrogruppen substituierte Benzole, wie Xylole, Chlorbenzol, o-Dichlorbenzol oder Nitrobenzol, sowie Pyridinbasen, wie Pyridin, Picolin oder Chinolin, ferner Ketone, wie Cyclohexanon, Äther, wie Äthylenglykolmonomethyl- oder -monoäthyläther, Amide, wie Dimethylformamid oder N-Methyl-pyrrolidon, sowie Dimethylsulfoxyd, Sulfolan oder Wasser allein, gegebenenfalls unter Druck. Man kann die Nachbehandlung auch in Wasser in Gegenwart von organischen Lösungsmitteln und/oder mit Zusatz von oberflächenaktiven Substanzen durchführen.

Die Nachbehandlung erfolgt vorzugsweise durch Erhitzen des Pigmentes im Wasser oder Lösungsmittel auf 100 bis 200 °C, wobei in gewissen Fällen eine Kornvergröberung und gegebenenfalls eine Kristallmodifikationsumwandlung eintritt, was sich günstig auf die Licht- und Migrationsechtheit der erhaltenen Pigmente auswirkt.

Die erfindungsgemässen Pigmente eignen sich zum Färben von hochmolekularem organischem Material natürlicher oder künstlicher Herkunft. Es kann sich z.B. um Naturharze, trocknende Öle oder Kautschuk handeln. Es kann sich aber auch um abgewandelte Naturstoffe handeln, beispielsweise um Chlorkautschuk, um ölmodifizierte Alkydharze, um Viskose oder um Cellulosederivate, wie Acetylcellulose und Nitrocellulose, und besonders um vollsynthetische organische Polyplaste, das heisst, um Kunststoffe, die durch Polymerisation, Polykondensation und Polyaddition hergestellt sind. Aus der Klasse dieser Kunststoffe seien besonders folgende genannt: Polyäthylen, Polypropylen, Polyisobutylen, Polystyrol, Polyvinylchlorid, Polyvinylacetat, Polyacrylnitril, Polyacrylsäure- und Polymethacrylsäureester; Polyester, insbesondere hochmolekulare Ester aromatischer Polycarbonsäuren mit polyfunktionellen Alkoholen; Polyamide; die Kondensationsprodukte von Formaldehyd mit Phenolen, die sogenannten Phenoplaste, und die Kondensationsprodukte von Formaldehyd mit Harnstoff, Thioharnstoff und Melamin, die sogenannten Aminoplaste; die als Lackharze verwendeten Polyester, und zwar sowohl gesättigte, wie z.B. Alkydharze, als auch ungesättigte, wie beispielsweise Maleinatharze, und ferner die unter den Namen «Epoxidharze» bekannten Polyadditions- bzw. Polykondensationsprodukte von Epichlorhydrin mit Polyolen oder Polyphenolen; ferner die sogenannten Thermoplaste, d.h. die nicht härtbaren Polyplaste. Es sei betont, dass nicht nur die einheitlichen Verbindungen, sondern auch Gemische von Polyplasten, sowie Mischkondensate und Mischpolymerisate, wie z.B. solche auf Basis von Butadien, erfindungsgemäss pigmentiert werden können.

Die erfindungsgemässen Pigmente sind für das Färben von Polyplasten, wie von als Lackrohstoffe bekannten, sogenannten Filmbildnern oder Bindemitteln, besonders von Leinölfirnis, Nitrocellulose, Alkydharzen, Melaminharzen und Harnstoff-Formaldehydharzen besonders geeignet. Die Pigmentierung der hochmolekularen organischen Materialien mit den Pigmenten der Formel I erfolgt beispielsweise derart, dass man ein solches Pigment gegebenenfalls in Form von Masterbatches, diesen Substraten unter Verwendung von Walzwerken, Misch- und Mahlapparaten zumischt. Das pigmentierte Material wird hierauf nach an sich bekannten Verfahren, wie Kalandrieren, Pressen, Strangpressen, Streichen, Giessen oder durch Spritzguss in die gewünschte endgültige Form gebracht. Oft ist es erwünscht, zur Herstellung von nicht starren Formlingen oder zur Verringerung ihrer Sprödigkeit den hochmolekularen Materialien vor der Verformung sogenannte Weichmacher einzuverleiben. Als solche können z.B. Ester der Phosphorsäure, Phthalsäure oder Sebacinsäure dienen. Die Weichmacher können vor oder nach der Einverleibung des Pigmentfarbstoffes in die Polyplaste eingearbeitet werden. Es ist ferner möglich, zwecks Erzielung verschiedener Farbtöne den hochmolekularen organischen Materialien neben den Verbindungen der Formel I noch Füllstoffe, bzw. andere farbgebende Bestandteile, wie Weiss-, Bunt- oder Schwarzpigmente, in beliebigen Mengen zuzufügen.

Zum Pigmentieren von Lacken und Druckfarben werden die hochmolekularen organischen Materialien und die Verbindungen der Formel I gegebenenfalls zusammen mit Zusatzstoffen, wie Füllmitteln, anderen Pigmenten, Siccativen oder Weichmachern, in einem gemeinsamen organischen Lösungsmittel oder Lösungsmittelgemisch fein dispergiert bzw. gelöst. Man kann dabei so verfahren, dass man die einzelnen Komponenten für sich oder auch mehrere gemeinsam dispergiert bzw. löst, und erst hierauf alle Komponenten zusammenbringt.

Die pigmentierten hochmolekularen organischen Materialien enthalten im allgemeinen Mengen von 0,001 bis 30 Gew.-% einer Verbindung der Formel I, bezogen auf das zu pigmentierende hochmolekulare organische Material; dabei enthalten Polyplaste und Lacke vorzugsweise 0,1 bis 5 Gew.-%, Druckfarben vorzugsweise 10 bis 30 Gew.-% einer Verbindung der Formel I. Die zu wählende Menge an Pigment richtet sich in erster Linie nach der gewünschten Farbstärke, ferner nach der Schichtdicke des Formlings und schliesslich gegebenenfalls auch nach dem Gehalt an Weisspigment im Polyplast.

Die erfindungsgemässen Pigmente zeichnen sich durch leichte Zugänglichkeit, gute Hitze-, Licht-, Überlackier-, Migrations- und Wetterechtheit, hohe Farbtonreinheit und Farbstärke aus.

In der US-A 3 963 694, den EP-A1 0 000737 und 0010722 sind Azopigmente beschrieben, die durch Kuppeln diazotierter Aminobenzole enthaltend einen ankondensierten Heteroring mit Acetoacetylamino-benzimidazolonen erhalten werden. Den nächst vergleichbaren Stand der Technik stellt die GB-A 1 188 766 dar. Von den dort beschriebenen Pigmenten unterscheiden sich die erfindungsgemässen, dadurch, dass sie im Rest der Diazokomponente Wasserstoff anstelle einer Gruppe der Formel –NHCXA aufweisen.

In dem nachfolgenden Beispiel bedeuten die Teile, sofern nichts anderes angegeben wird, Gewichtsteile, die Prozente Gewichtsprozente und

die Temperaturen sind in Celsiusgraden angegeben.

Beispiel 1

6,5 Teile 5-Amino-6-methyl-benzimidazolon werden in 170 Vol.-Teilen Eisessig bei 60° gelöst. Die braune Lösung wird mit 11 Vol.-Teilen konzentrierter Salzsäure verrührt, die Lösung hellt sich etwas auf, wird dann mit 35 Teilen Wasser verdünnt und auf 5° abgekühlt. Sie wird danach während 20 Minuten und bei 5° mit 10,8 Vol.-Teilen 4N-Natriumnitritlösung tropfenweise versetzt, und die erhaltene olivgrüne Diazolösung wird klarfiltriert.

Man löst nachher 11,2 Teile 2-Acetoacetylamino-6-äthoxy-benzthiazol mit 30 Vol.-Teilen 30%iger Natronlauge in einem Gemisch aus 200 Teilen Wasser und 200 Vol.-Teilen Alkohol. Die gelbe Lösung wird filtriert, auf 5° abgekühlt und in 20 Minuten tropfenweise mit der Diazolösung versetzt. Es entsteht dabei ein brauner Niederschlag. Die erhaltene Suspension wird durch langsame Zugabe von 95 Vol.-Teilen 30%iger wässriger Natriumhydroxydlösung auf einen pH-Wert von 5 eingestellt. Sie wird während 4 Stunden bei einer bis auf 23° steigenden Temperatur gerührt, im Laufe einer Stunde auf 75° erhitzt und heiss abgenutscht. Der Rückstand wird salzfrei gewaschen und im Vakuum bei 80° getrocknet. Man erhält 16,5 Teile, entsprechend 92% der Theorie, eines dunkelbraunen Pulvers der Formel

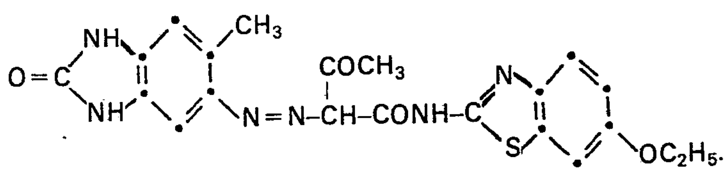

Das in N-Methyl-pyrrolidon nachbehandelte Pigment (1 Std. Bei 156°) erzeugt in Polyvinylchlorid echte und reine orange Färbungen.

| Analyse: | | | | |
|---|---|---|---|---|
| Berechnet: | C 55,74 | H 4,65 | N 18,57 | S 7,09% |
| Gefunden: | C 55,7 | H 4,6 | N 18,7 | S 7,1%. |

In nachstehender Tabelle sind weitere erfindungsgemässe Pigmente beschrieben, die durch Kuppeln der diazotierten Basen der Kolonne I mit den Acetessigaryliden der Amine der Kolonne II erhalten werden.

Kolonne III gibt den Farbton einer mit 0,2% dieser Pigmente gefärbten PVC-Folie an.

Tabelle

| Bsp. Nr. | I | II | III |
|---|---|---|---|
| 2 | 5-Amino-6-chlor-benzimidazolon | 2-Amino-6-äthoxy-benzthiazol | orange |
| 3 | 6-Amino-7-chlor-4-methylchinolon-2 | 2-Amino-6-äthoxy-benzthiazol | gelb |
| 4 | 4-Amino-phthalimid | 2-Amino-6-äthoxy-benzthiazol | gelb |
| 5 | 5-Amino-7-chlor-benzimidazolon | 2-Amino-6-äthoxy-benzthiazol | orange |
| 6 | 5-Amino-6-methyl-benzimidazolon | 2-Amino-6-methoxy-benzthiazol | rot |
| 7 | 6-Amino-7-chlor-4-methylchinolon-2 | 2-Amino-6-methoxy-benzthiazol | braun |
| 8 | 4-Amino-phthalimid | 2-Amino-6-methoxy-benzthiazol | gelb |
| 9 | 5-Amino-6-chlor-benzimidazolon | 2-Amino-6-methyl-benzthiazol | gelb |
| 10 | 5-Amino-6-methyl-benzimidazolon | 2-Amino-6-methyl-benzthiazol | orange |
| 11 | 5-Amino-6-methoxy-benzimidazolon | 2-Amino-6-methyl-benzthiazol | rot |
| 12 | 5-Amino-6-chlor-benzimidazolon | 2-Amino-6-chlor-benzthiazol | orange |
| 13 | 5-Amino-6-methyl-benzimidazolon | 2-Amino-6-chlor-benzthiazol | rotstichiges Orange |
| 14 | 5-Amino-6-methoxy-benzimidazolon | 2-Amino-6-chlor-benzthiazol | rot |
| 15 | 6-Amino-7-chlor-4-methylchinolon-2 | 2-Amino-6-chlor-benzthiazol | gelb |
| 16 | 7-Amino-7-phenoxy-4-methylchinolon-2 | 2-Amino-6-chlor-benzthiazol | gelb |

Tabelle Fortsetzung

| Bsp. Nr. | I | II | III |
|---|---|---|---|
| 17 | 5-Amino-6-methyl-benzimidazolon | 2-Amino-6-acetamino-benzthiazol | rotstichiges Orange |
| 18 | 5-Amino-6-chlor-benzimidazolon | 2-Amino-6-acetamino-benzthiazol | orange |
| 19 | 7-Amino-6-phenoxy-4-methylchinolon-2 | 2-Amino-6-acetamino-benzthiazol | orange |
| 20 | 7-Amino-6-methyl-phenylmorpholon | 2-Amino-6-acetamino-benzthiazol | orange |
| 21 | 5-Amino-7-chlor-benzimidazolon | 2-Amino-6-acetamino-benzthiazol | gelb |
| 22 | 6-Amino-7-chlor-4-methylchinolon-2 | 2-Amino-6-benzthiazol-carbonsäureamid | grünstichiges Gelb |
| 23 | 5-Amino-6-methylbenzimidazolon | 2-Amino-5-chlor-6-methyl-4-methoxy-benzthiazol | rot |
| 24 | 6-Amino-7-chlor-4-methylchinolon-2 | 2-Amino-4,6,7-trimethyl-benzthiazol | gelb |
| 25 | 5-Amino-6-methyl-benzimidazolon | 2-Amino-4,6-dichlor-benzthiazol | orangestichiges Rot |
| 26 | 6-Amino-7-chlor-4-methylchinolon-2 | 2-Amino-4,6-dichlor-benzthiazol | gelb |
| 27 | 6-Amino-7-chlor-4-methylchinolon-2 | 2-Amino-6-benzthiazol-carbonsäureäthylester | grünstichiges Gelb |
| 28 | 5-Amino-6-methyl-benzimidazolon | 2-Amino-6-n-butyloxy-benzthiazol | orange |
| 29 | 5-Amino-6-methyl-benzimidazolon | 2-Amino-6-nitro-benzthiazol | scharlach |
| 30 | 6-Amino-7-chlor-4-methylchinolon-2 | 2-Amino-6-phenoxy-benzthiazol | orange |
| 31 | 6-Amino-7-chlor-4-methylchinolon-2 | 2-Amino-5,6-dimethyl-benzthiazol | gelb |
| 32 | 6-Amino-7-chlor-4-methylchinolon-2 | 2-Amino-6-fluor-benzthiazol | gelb |

Das 2-Acetoacetylamino-6-chlor-benzthiazol für Beispiel 12 kann folgenderweise hergestellt werden:

73,9 Teile 2-Amino-6-chlorbenzthiazol werden in 110 Vol.-Teilen Eisessig auf 55° erhitzt. Die dünne weisse Suspension wird in 15 Minuten mit 41 Teilen Diketen tropfenweise versetzt. Die Temperatur steigt dabei auf 110°; bei 70° entsteht eine sehr dicke Suspension. Man verdünnt diese mit 100 Vol.-Teilen Eisessig, rührt 2 Stunden bei 80°, lässt auf 65° abkühlen und verdünnt mit 300 Teilen dest. Wasser. Die dicke hellbeige Suspension wird 2 Stunden bei einer bis auf 26° sinkenden Temperatur gerührt und abgenutscht. Das Produkt wird mit 1500 Teilen Wasser gewaschen und im Vakuum bei 70° getrocknet. Nach dem Trocknen erhält man 93,5 Teile (87% der Theorie) eines hellbeigen Pulvers vom Schmelzpunkt 248–250°.

| Analyse: | | | | | |
|---|---|---|---|---|---|
| Berechnet: | C 49,17 | H 3,38 | Cl 13,19 | N 10,43 | S 11,93% |
| Gefunden: | C 49,1 | H 3,4 | Cl 13,4 | N 10,4 | S 11,9% |

Beispiel 33

67 g Polyvinylchlorid-Pulver (Suspensionspolymerisat), 33 g Dioctylphthalat, 2 g Dibutylzinndilaurat, 0,3 g eines Stabilisators auf Phosphatbasis und 0,7 g des nach Beispiel 1 hergestellten Pigmentes werden vermischt und auf dem 160° heissen Mischwalzwerk während 15 Minuten verarbeitet. Anschliessend wird auf dem Kalander eine Folie von 0,4 mm Dicke hergestellt. Sie ist in einem reinen orangen Farbton gefärbt. Die Färbung ist licht-, wetter- und migrationsecht.

Beispiel 34

0,2 g des nach Beispiel 1 hergestellten Pigments und 100 g Polystyrolgranulat werden gemischt und auf dem Mischwalzwerk bei 130° verarbeitet, bis die Färbung homogen erscheint. Die Masse wird alsdann zwischen verchromten Platten bei 150° zu Platten verpresst. Die orange Färbung der Platten ist gut lichtecht. Man kann die Pigmentierung anstatt auf dem Mischwalzwerk auch in der Strangpresse vornehmen. Ferner ist es möglich, die homogen pigmentierte Masse zu granulieren und in der Spritzgussmaschine zu verformen.

Beispiel 35

0,2 g des nach Beispiel 1 hergestellten Pigmentes, 1 g Titandioxyd (Rutil) und 100 g Polyäthylengranulat werden in einer Trommel gemischt und das Gemisch anschliessend auf dem Mischwalzwerk bei 130° verarbeitet. Die Masse wird heiss zu Platten verpresst oder in der Strangpresse verformt. Die Platten zeigen einen schönen Orange-Farbton von ausgezeichneter Lichtechtheit.

Beispiel 36

0,1 g des nach Beispiel 1 hergestellten Pigmentes, 0,5 g Titandioxyd (Rutil) und 100 g Polypropylengranulat werden in einer Trommel gemischt

und das Gemisch anschliessend auf dem Mischwalzwerk bei 130° verarbeitet bis eine homogen gefärbte Mischung vorliegt. Die Masse wird heiss zu Fellen von 1 Millimeter verpresst. Die Felle zeigen einen schönen orangen Farbton von guter Lichtechtheit.

Beispiel 37

100 g eines pulverförmigen Formaldehyd-Harnstoffharzes, das für Pressmassen geeignet ist, 10 g Lithopone und 1 g des nach Beispiel 1 hergestellten Pigments werden in einer Kugelmühle 16 Stunden gemahlen. Danach wird die Masse bei 140–160° in Formen gepresst. Die orangen Muster besitzen gute Licht- und Hitzebeständigkeit.

Beispiel 38

24,5 g eines unveresterten Epoxidharzes, 10,5 g eines ölreaktiven Alkylphenolharzes, 35 g Xylol und 30 g Diacetonalkohol werden zu einem Lack verarbeitet und mit 4 g des nach Beispiel 1 hergestellten Pigmentes in einer Kugelmühle 24 Stunden gemahlen. Nach dem Spritzen auf Aluminiumfolien und Einbrennen bei 120° werden orange Überzüge von sehr guter Hitze-, Überlackier- und Lichtechtheit erhalten.

Beispiel 39

4 Teile des fein verteilten Pigments gemäss Beispiel 1 werden in 20 Teilen Lösungsmittel der folgenden Zusammensetzung eingerührt: 50 Teile Solvesso 150® (Gemisch aromatischer Kohlenstoffe), 15 Teile Butylacetat, 5 Teile Exkin II® (Verlaufmittel auf Ketoximbasis), 25 Teile Methyl-isobutylketon und 5 Teile Silikonöl (1% in Solvesso 150). Nachdem die vollständige Feinverteilung erreicht ist (je nach Art des Rührers in ca. 15–60 Minuten), werden die Bindemittel zugesetzt, nämlich 48,3 Teile Baycryl L 530® (Acrylharz) (51% in Xylol/Butanol 3:1) und 23,7 Teile Maprenal TTX® (Melaminharz; 55% in Butanol). Nach kurzem Homogenisieren wird der Lack nach üblichen Methoden, wie Spritzen und Tauchen oder speziell zur kontinuierlichen Beschichtung von Metallblechen um «Coil-Coating»-Verfahren appliziert und eingebrannt (Einbrennen 30 Min., 130°). Die erhaltenen orangen Lackierungen zeichnen sich aus durch sehr guten Verlauf, hohen Glanz und ausgezeichnete Feinverteilung des Pigmentes, sowie durch ausgezeichnete Wetterechtheiten.

Beispiel 40

4 g des nach Beispiel 1 erhaltenen Pigmentes, 35 g einer 60%igen Lösung eines mit Harnstoff-Formaldehyd modifizierten Alkydharzes in Xylol-Butanol 1:1, 10 g Terpentinöl und 5 g Xylol werden 48 Stunden in einer Kugelmühle gemahlen. Nach dem Spritzen des entstandenen, gefärbten Lackes auf eine Aluminiumfolie und Einbrennen bei 120° erhält man einen orangen Überzug von sehr guter Licht-, Hitze- und Überlackierechtheit.

Beispiel 41

80 g eines ungesättigten, flüssigen Polyesterharzes, 19,72 g Monostyrol und 0,28 g eines Kobalt-Siccatives, welches 16% Kobalt enthält, werden mit 1 g des nach Beispiel 1 hergestellten Pigmentes und 5 g Titandioxyd (Rutil) 48 Stunden in einer Kugelmühle gemahlen. Kurz vor Verwendung dieses Lackes wird eine Mischung bestehend aus 4,15 g Cumolhydroperoxyd (70%ig), 2,52 g Essigester und 13,33 g Butylacetat zugegeben. Nach dem Abziehen dieser Mischung auf Karton und Trocknen an der Luft erhält man einen orange-farbenen Überzug von sehr guter Licht-, Hitze- und Überlackierechtheit.

**Patentansprüche**

1. Verbindungen der Formel I

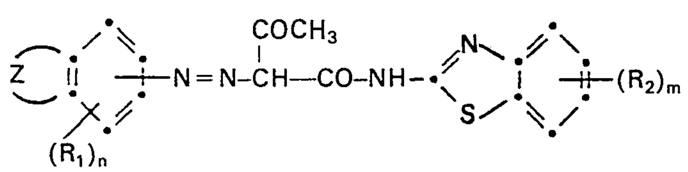

(I),

worin $R_1$ Wasserstoff, Methyl, Chlor, Methoxy, Äthoxy, Phenoxy oder $C_2$–$C_5$-Alkoxycarbonyl und $R_2$ Methyl, Chlor, Fluor, Brom, $C_1$–$C_4$-Alkoxy, Phenoxy, Methoxycarbonyl, Äthoxycarbonyl, Carbamoyl, Nitro oder eine Gruppe –NHCO–$R_3$ bedeuten, wobei $R_3$ eine $C_1$–$C_3$-Alkylgruppe bedeutet, Z zusammen mit den beiden Kohlenstoffatomen, an welches es gebunden ist, einen 5- oder 6-gliedrigen heterocyclischen Ring bildet, wobei Z einen zweiwertigen Rest der Formeln –CONHCO–, –CONHCONH–, –CONHCR$_5$=N–, –NHCONR$_4$–, –NHCOCONH–, –NR$_4$COO–, –NR$_4$COS–, –N=CR$_6$O–, –N=CR$_6$S–, –N=CR$_6$NH–, –NHCOCH=CR$_4$– oder –NHCOCH$_2$O– bedeutet, wobei $R_4$ Wasserstoff, $C_1$–$C_4$-Alkyl oder gegebenenfalls durch Halogen, $C_1$–$C_4$-Alkyl oder $C_1$–$C_4$-Alkoxy substituiertes Phenyl und $R_5$ Wasserstoff oder eine Gruppe 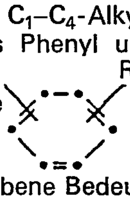 bedeuten, wobei $R_4$ die oben angegebene Bedeutung hat, und $R_6$ Wasserstoff, Methyl oder Phenyl ist, n 1 oder 2 und m 1, 2 oder 3 bedeuten.

2. Verbindungen gemäss Patentanspruch 1 der Formel I, worin m und n 1 bedeuten.

3. Verbindungen gemäss Patentanspruch 1 der Formel I, worin $R_1$ und $R_2$ die im Anspruch 1 angegebene Bedeutung haben und Z eine Gruppe –NHCOCH=CR$_4$– mit $R_4$ = Wasserstoff und besonders Methyl, eine Gruppe –CONHCO– und

vor allem eine Gruppe $-NHCONR_4-$ darstellt, worin $R_4$ die im Anspruch 1 angegebene Bedeutung hat.

4. Verbindungen gemäss Patentanspruch 3, worin Z eine Gruppe $-NHCONH-$ ist.

5. Verbindungen gemäss Patentanspruch 1, der Formel II

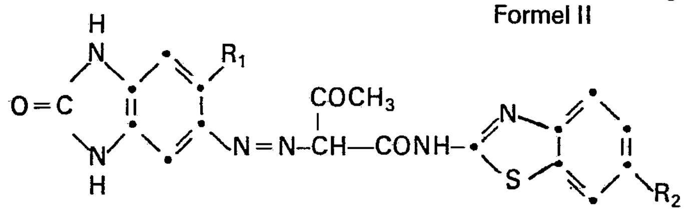

(II)

worin $R_1$ Methyl, Chlor oder Methoxy und $R_2$ Methyl, Chlor, geradkettiges $C_1$–$C_4$-Alkoxy oder eine Gruppe $-NHCO-R_3$ bedeuten, wobei $R_3$ eine $C_1$–$C_3$-Alkylgruppe bedeutet.

6. Verfahren zur Herstellung der Verbindungen der Formel I gemäss Patentanspruch 1, dadurch gekennzeichnet, dass man ein Diazoniumsalz eines Amins der Formel III

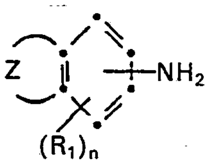

(III),

mit einem Acetoacetylamid der Formel IV

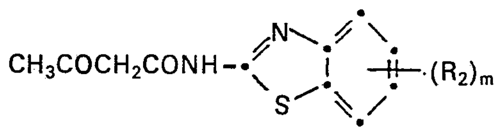

(IV),

kuppelt, wobei die Symbole Z, $R_1$, $R_2$, m und n die in Anspruch 1 angegebene Bedeutung haben.

7. Verfahren zum Färben von hochmolekularen organischen Materialien, gekennzeichnet durch die Verwendung eines Pigments der Formel I nach Anspruch 1.

**Revendications**

1. Composés répondant à la formule I:

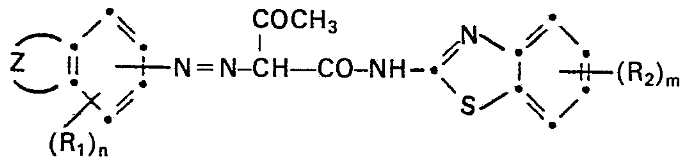

(I),

dans laquelle

$R^1$ représente un atome d'hydrogène ou de chlore, un radical méthyle, méthoxy, éthoxy ou phénoxy ou un radical alcoxycarbonyle contenant de 2 à 5 C dans son alcoxy,

$R^2$ représente un atome de chlore, de fluor ou de brome, un méthyle, un alcoxy en $C_1$–$C_4$, un phénoxy, un méthoxycarbonyle, un éthoxycarbonyle, un carbamoyle, un nitro ou un radical $-NHCO-R_3$ dans lequel $R_3$ désigne un alkyle en $C_1$–$C_3$,

Z forme, avec les deux atomes de carbone auxquels il est lié, un noyau hétérocyclique à 5 ou 6 maillons et représente un radical bivalent $-CONHCO-$, $-CONHCONH-$, $-CONHCR_5=N-$, $-NHCONR_4-$, $-NHCOCONH-$, $-NR_4COO-$, $-NR_4COS-$, $-N=CR_6O-$, $-N=CR_6S-$, $-N=CR_6NH-$, $-NHCOCH=CR_4-$ ou $-NHCOCH_2O-$, le symbole $R_4$ désignant l'hydrogène, un alkyle en $C_1$–$C_4$ ou un phényle éventuellement porteur d'un halogène, d'un alkyle en $C_1$–$C_4$ ou d'un alcoxy en $C_1$–$C_4$, $R_5$ l'hydrogène ou un radical 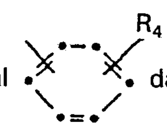 dans lequel $R_4$ a la signification précédemment donnée, et $R_6$ l'hydrogène, un méthyle ou un phényle,

n est égal à 1 ou à 2 et

m est égal à 1, à 2 ou à 3.

2. Composés de formule I selon la revendication 1 dans lesquels m et n sont égaux chacun à 1.

3. Composés de formule I selon la revendication 1 dans lesquels $R_1$ et $R_2$ ont les significations qui ont été données à la revendication 1 et Z représente:

un radical $-NHCOCH=CR_4-$ dans lequel $R_4$ désigne l'hydrogène ou, mieux, un radical méthyle,

un radical $-CONHCO-$ ou, plus particulièrement,

un radical $-NHCONR_4-$ dans lequel $R_4$ a la signification qui a été donnée à la revendication 1.

4. Composés selon la revendication 3 dans lesquels Z représente un radical $-NHCONH-$.

5. Composés selon la revendication 1 qui répondent à la formule II:

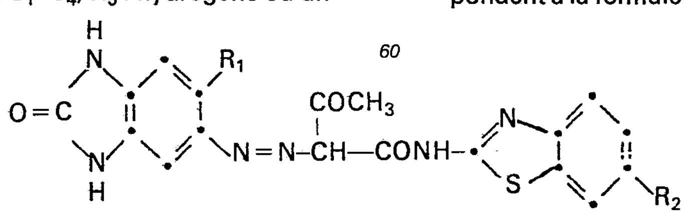

(II)

dans laquelle $R_1$ représente un radical méthyle, un atome de chlore ou un radical méthoxy et $R_2$ représente un radical méthyle, un atome de chlore, un radical alcoxy en $C_1$–$C_4$ linéaire ou un radical –NHCO–$R_3$ dans lequel $R_3$ désigne un alkyle en $C_1$–$C_3$.

6. Procédé de préparation des composés de formule I selon la revendication 1, procédé caractérisé en ce qu'on copule un sel de diazonium d'une amine de formule III:

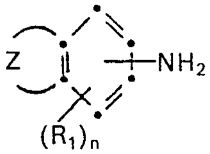

(III),

avec un acétoacétylamide de formule IV:

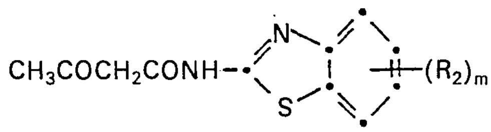

(IV),

les symboles Z, $R_1$, $R_2$, m et n ayant, dans ces formules, les significations qui leur ont été données à la revendication 1.

7. Procédé pour teindre des matières organiques à haut point moléculaire, procédé caractérisé en ce qu'on utilise un pigment de formule I selon la revendication 1.

## Claims

1. A compound of the formula I

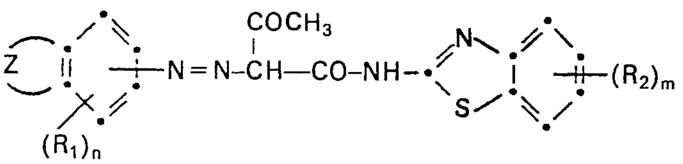

(I),

wherein $R_1$ is hydrogen, methyl, chlorine, methoxy, ethoxy, phenoxy or $C_2$–$C_5$-alkoxycarbonyl, and $R_2$ is methyl, chlorine, fluorine, bromine, $C_1$–$C_4$-alkoxy, phenoxy, methoxycarbonyl, ethoxycarbonyl, carbamoyl, nitro or a group –NHCO–$R_3$, in which $R_3$ is a $C_1$–$C_3$-alkyl group, Z together with the two carbon atoms to which it is bound forms a 5- or 6-membered heterocyclic ring, where Z is a bivalent radical of the formula –CONHCO–, –CONHCONH–, –$CONHCR_5=N$–, –$NHCONR_4$–, –NHCOCONH–, –$NR_4COO$–, –$NR_4COS$–, –$N=CR_6O$–, –$N=CR_6S$–, –$N=CR_6NH$–, –$NHCOCH=CR_4$– or –$NHCOCH_2O$–, in which $R_4$ is hydrogen, $C_1$–$C_4$-alkyl or phenyl which is unsubstituted or substituted by halogen, $C_1$–$C_4$-alkyl or $C_1$–$C_4$-alkoxy, and $R_5$ is hydrogen or a group

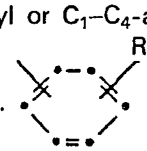

,

where $R_4$ has the meaning defined above, and $R_6$ is hydrogen, methyl or phenyl, n ist 1 or 2, and m is 1, 2 or 3.

2. A compound according to Claim 1 of the formula I wherein m and n are each 1.

3. A compound according to Claim 1 of the formula I wherein $R_1$ and $R_2$ have the meanings given in Claim 1, and Z is a group –$NHCOCH=CR_4$–, with $R_4$ being hydrogen and especially methyl, or Z is a group –CONHCO– and in particular a group –$NHCONR_4$–, wherein $R_4$ has the meaning defined in Claim 1.

4. A compound according to Claim 3, wherein Z is a group –NHCONH–.

5. A compound according to Claim 1, of the formula II

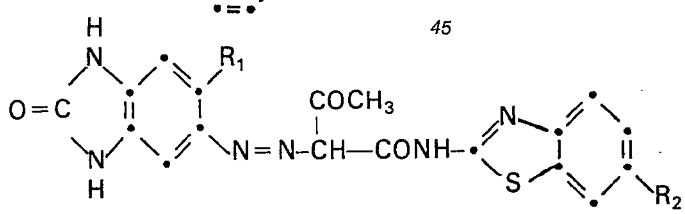

(II)

wherein $R_1$ is methyl, chlorine or methoxy, and $R_2$ is methyl, chlorine, straight-chain $C_1$–$C_4$-alkoxy or a group –NHCO–$R_3$, where $R_3$ is a $C_1$–$C_3$-alkyl group.

6. A process for producing a compound of the formula I according to Claim 1, which process comprises coupling a diazonium salt of an amine of the formula III

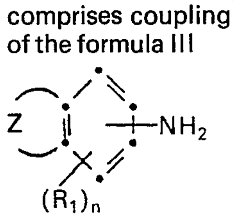

(III),

with an acetoacetylamide of the formula IV

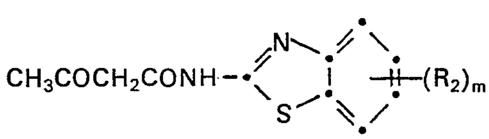

(IV),

wherein the symbols Z, $R_1$, $R_2$, m and n have the meanings defined in Claim 1.

7. A process for dyeing high-molecular organic materials by the use of a pigment of the formula I according to Claim 1.